# EUROPÄISCHE PATENTSCHRIFT

(11) **EP 2 693 014 B1**
(45) Veröffentlichungstag und Bekanntmachung des Hinweises auf die Patenterteilung: **08.07.2015**
(21) Anmeldenummer: 13002242.9
(22) Anmeldetag: 26.04.2013
(51) Int. Cl.: F01N 3/20

(54) **Reduktionsmitteldosiersystem mit Dosierkammer zur exakten Dosiermengeneinstellung**
Reductant metering system with metering chamber for exact metering adjustment
Système de dosage d'agent de réduction avec chambre de dosage pour le réglage exact de la quantité de dosage

(30) Priorität: 31.07.2012 DE 102012015046
(43) Veröffentlichungstag der Anmeldung: 05.02.2014
(73) Patentinhaber: Albonair GmbH, 44263 Dortmund (DE)
(72) Erfinder: Dolenec, Sascha, 59439 Holzwickede (DE)
(74) Vertreter: Patentanwaltskanzlei Methling

(56) Entgegenhaltungen:
- WO-A1-2012/123051
- DE-A1-102009 029 188
- DE-A1-102010 030 050

## Beschreibung

Die Erfindung betrifft ein Reduktionsmitteldosiersystem zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird, in die Förderleitung eine Dosierkammer integriert ist, die mittels eines lageveränderlichen Elementes in zwei getrennte Volumina unterteilt ist, wobei jedes der beiden Volumina über zumindest einen Eingang und zumindest einen Ausgang verfügt.

Ferner betrifft die Erfindung ein Verfahren zum Betrieb eines Reduktionsmitteldosiersystems zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird.

Ein derartiges Reduktionsmitteldosiersystem sowie ein solches Verfahren zum Betrieb eines Reduktionsmitteldosiersystems sind aus DE 10 2010 030 050 A1 bekannt.

Katalysatoren zur selektiven katalytischen Reduktion, sogenannte SCR-Katalysatoren (englisch: selective catalyic reduction, abgekürzt: SCR) werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel in das Abgassystem mit einer Dosiervorrichtung eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil gemäß DIN 70070, das sogenannte AdBlue, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion (englisch selective catalyic reduction, SCR) der Ausstoß von Stickoxyden um etwa 90 % reduziert.

Bei den bekannten Reduktionsmitteldosiersystemen zur Einspritzung eines Reduktionsmittels in den Abgasstrom eines Verbrennungsmotors zur selektiven katalytischen Reduktion wird die Reduktionsmittellösung mittels einer Membran- oder Kolbenpumpe zur Düse gefördert. Nachteilig dabei ist es, dass es aufgrund der Fördertakte der Pumpe unmöglich ist, den geförderten Massenstrom des Reduktionsmittels konstant zu halten und exakt zu bestimmen. Aufgrund der Pulsationen der Membran- oder Kolbenpumpe kommt es vielmehr zu einer diskontinuierlichen Beladung der Düse mit Reduktionsmittel.

Die Aufgabe der Erfindung ist es, ein Reduktionsmitteldosiersystem der eingangs genannten Art derart weiter zu bilden, dass unabhängig von der Beschaffenheit und den Eigenschaften der eingesetzten Förderpumpe eine taktweise exakte Festlegung des Dosiervolumens möglich ist.

Eine weitere Aufgabe der Erfindung ist es, ein Verfahren zum Betrieb eines Reduktionsmitteldosiersystems anzugeben, welches unabhängig von der Beschaffenheit und den Eigenschaften der eingesetzten Förderpumpe eine taktweise exakte Festlegung des Dosiervolumens gestattet.

Diese Aufgabe wird erfindungsgemäß durch ein Reduktionsmitteldosiersystem gemäß Anspruch 1 und durch ein Verfahren zum Betrieb eines Reduktionsmitteldosiersystems gemäß Anspruch 12 gelöst. Vorteilhafte Weiterbildungen der Erfindung sind in den jeweiligen abhängigen Ansprüchen angegeben.

Besonders vorteilhaft bei dem Reduktionsmitteldosiersystem zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird, ist es, dass in die Förderleitung eine Dosierkammer integriert ist, die mittels eines lageveränderlichen Elementes in zwei getrennte Volumina unterteilt ist, wobei jedes der beiden Volumina über zumindest einen Eingang und zumindest einen Ausgang verfügt, wobei die Eingänge beider Volumina mit der Förderleitung der Pumpe verbauden sind und von der Förderleitung gespeist werden.

Besonders vorteilhaft bei dem Verfahren zum Betrieb eines Reduktionsmitteldosiersystems zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über eine Förderleitung gefördert und über zumindest eine Düse in den Abgasstrom des Verbrennungsmotors eingeleitet wird, ist es, dass in die Förderleitung eine Dosierkammer integriert ist, die mittels eines lageveränderlichen Elementes in zwei getrennte Volumina unterteilt ist, wobei jedes der beiden Volumina über zumindest einen Eingang und zumindest einen Ausgang verfügt, wobei während des Dosierbetriebes des Dosiersystems wiederholt Zyklen durchlaufen werden, bei denen alternierend der Eingang des ersten Volumens gleichzeitig mit dem Ausgang des zweiten Volumens geöffnet ist, während der Eingang des zweiten Volumens und der Ausgang des ersten Volumens geschlossen sind, und anschließend der Eingang des zweiten Volumens gleichzeitig mit dem Ausgang des ersten Volumens geöffnet ist, während der Eingang des ersten Volumens und der Ausgang des zweiten Volumens geschlossen sind.

Die Begriffe Reduktionsmitteldosiersystem bzw. Dosiersystem werden im Sinne dieser Beschreibung synonym verwendet. Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt.

In einer bevorzugten Gesamtanordnung weist das Reduktionsmitteldosiersystem einen Tank auf, in den die Reduktionsmittellösung eingefüllt wird und aus dem die Reduktionsmittellösung entnommen und mittels der Förderpumpe gefördert und über zumindest eine Düse in den Abgasstrom des Verbrennungsmotors eingeleitet wird.

Kern der Erfindung ist somit, dass bei dem Dosiersystem auf der Druckseite der Förderpumpe in die Förderleitung eine Dosierkammer integriert ist, wobei diese Dosierkammer mittels eines lageveränderlichen Elementes in zwei getrennte Volumina unterteilt ist und wobei jedes der beiden Volumina über zumindest einen Eingang und zumindest einen Ausgang verfügt. Vorzugsweise ist dieses lageveränderliche Element durch eine flexible Membran gebildet.

Die Arbeitsweise des Dosiersystems während der Reduktionsmitteldosierung erfolgt dergestalt, dass wiederholt Zyklen durchlaufen werden. Bei diesen Zyklen ist zunächst der Eingang des ersten Volumens geöffnet, so dass die Förderpumpe in das erste Volumen fördert, wobei in diesem Moment der Ausgang des ersten Volumens geschlossen ist, so dass das erste Volumen in der Dosierkammer mit Reduktionsmittel aufgrund der Förderung durch die Förderpumpe gefüllt wird. Gleichzeitig ist der Eingang des zweiten Volumens geschlossen, während gleichzeitig der Ausgang dieses zweiten Volumens geöffnet ist.

Dadurch, dass die Dosierkammer mittels des lageveränderlichen Elementes in zwei getrennte Volumina unterteilt ist, das Gesamtvolumen der Dosierkammer jedoch konstant ist, wird das in der zweiten Kammer befindliche Reduktionsmittel über den Ausgang der zweiten Kammer herausgedrückt, während das erste Volumen über den geöffneten Eingang befüllt wird und aufgrund der Befüllung des ersten Volumens das lageveränderliche Element entsprechend ausgelenkt wird, so dass das zweite Volumen entleert wird.

Besonders vorteilhaft ist dabei, dass die Erfindung taktweise die genaue Festlegung des Dosiervolumens gestattet und unabhängig von der Funktionsweise und der Beschaffenheit der Förderpumpe arbeitet. Es werden keine zusätzlichen Massenstrommessmittel in der Dosierstrecke benötigt und das System arbeitet ohne Rückschlagventile.

Ein weiterer Vorteil bei dem Reduktionsmitteldosiersystem ist es, dass dieses hinter der Pumpe kavitationsfrei arbeitet. Dabei wird eine einfach aufgebaute elektronische Steuerung ermöglicht, da durch die Dosierkammer eine exakte Dosierung gewährleistet ist. Ein weiterer Vorteil besteht darin, dass die hohe Last der Pumpe von zu steuernden Bauteilen mit niedriger Last, wie insbesondere von der Einspritzdüse, entkoppelt wird.

In einer bevorzugten Ausführungsform weist jedes der beiden Volumina an seinem Eingang ein schaltbares Einlassventil auf.

Vorzugsweise weist jedes der beiden Volumina an seinem Ausgang ein schaltbares Auslassventil auf.

Bei den Einlassventilen und/oder bei den Auslassventilen kann es sich um magnetisch oder piezoelektrisch oder elektromotorisch oder pneumatisch betätigte Schaltventile handeln. Dies bedeutet, dass die Ventile auf beliebige Art angesteuert sein können.

In dieser Ausführungsform besitzt somit jede der in der Dosierkammer gebildeten zwei Volumina einen Eingang und einen Ausgang, welche jeweils ein schaltbares Ventil aufweisen.

Vorzugsweise weist die Förderleitung ein Mehrwegeventil auf, mittels dessen der Einlass zu den beiden Volumina steuerbar ist.

Vorzugsweise münden die Ausgänge beider Volumina in eine Dosierleitung zur Düse. Dabei kann die Dosierleitung ein Mehrwegeventil aufweisen, mittels dessen der Auslass aus den beiden Volumina steuerbar ist.

Es sind somit Lösungen möglich, bei denen jeweils einzelne Schaltventile an den Eingängen und Ausgängen zu den beiden Volumina in der Dosierkammer vorgesehen sind. Alternativ können auch in der Förderleitung stromauf der Dosierkammer sowie in der Dosierleitung stromab der Dosierkammer Mehrwegeventile angeordnet sein, mittels derer das Öffnen und Schließen der Einlässe und Auslässe der beiden Volumina möglich ist.

Vorzugsweise ist die Förderpumpe druckbegrenzt und/oder es ist zwischen der Förderpumpe und der Dosierkammer ein Druckbegrenzer in die Förderleitung integriert.

In einer bevorzugten Ausführungsform des Reduktionsmitteldosiersystems ist eine Druckluftversorgung vorgesehen, wobei das Reduktionsmittel innerhalb oder außerhalb der Düse mittels Druckluft zerstäubt wird. Zur Zerstäubung des Reduktionsmittels kann eine Mischkammer vorgesehen sein, innerhalb derer eine Zerstäubung des Reduktionsmittels mittels der Druckluft bereits vor der Einleitung in den Abgastrakt erfolgt. In einer bevorzugten Ausführungsform ist jedoch die Düse als außenmischende Zweistoffdüse ausgebildet, bei der aus einer ersten Düsenöffnung die Reduktionsmittellösung austritt und aus einer zweiten Düsenöffnung Druckluft austritt, wobei die beiden Düsenöffnungen derart zueinander ausgerichtet sind, dass die Druckluft das Reduktionsmittel außerhalb der Düse zerstäubt, so dass die Düse als außenmischende Zweistoffdüse ausgebildet ist und die Aerosolbildung außerhalb der Düse erfolgt.

Vorzugsweise ist eine Druckluftversorgung vorgesehen, die ein Schaltventil und/oder ein Druckregelventil aufweist. Dieses Schaltventil dient der Steuerung, d. h. der Ein- und Abschaltung der Druckluftversorgung.

Alternativ oder kumulativ kann die Druckluftversorgung ein Druckregelventil aufweisen. Hierdurch kann die Druckluft auf ein zur Zerstäubung des Reduktionsmittels mittels Druckluft gewünschtes Druckniveau eingestellt werden. Die Druckluft selbst kann aus einem bordeigenen Druckluftsystem, beispielsweise eines Nutzfahrzeuges, in dessen Abgastrakt das Dosiersystem angeordnet ist, entnommen werden, ohne dass der in dem Druckluftsystem vorherrschende Systemdruck eine Einschränkung darstellt, da der Druck der Druckluft auf den gewünschten Druck abgesenkt werden kann.

In einer bevorzugten Ausführungsform des Reduktionsmitteldosiersystems ist eine Druckluftversorgung vorgesehen, wobei die Förderleitung und/oder die Dosierkammer und/oder die Dosierleitung über ein Schaltventil an die Druckluftversorgung angeschlossen sind, um sie nach Beendigung der Dosierung mittels Druckluft von Reduktionsmittel zu befreien.

Hierdurch können die Förderleitung und/oder die Dosierkammer und/oder die Dosierleitung nach Beendigung der Dosierung mittels der Druckluft von der Reduktionsmittellösung befreit werden, um ein Einfrieren oder Auskristallisieren der Reduktionsmittellösung zu verhindern. Hierdurch kann Frostschäden effektiv vorgebeugt werden.

Bei der Dosierpumpe kann es sich insbesondere um eine Membranpumpe oder eine Kolbenpumpe oder eine Kreiselpumpe oder eine Orbitalpumpe oder eine Zahnradpumpe handeln.

Eine als Dosierpumpe dienende Membranpumpe kann dabei beispielsweise mit einer Frequenz von bis zu 50 Hz oder bis zu 100 Hz angesteuert werden. Das Ansteuerungssignal der Membranpumpe kann dabei pulsweitenmoduliert sein.

Bei dem Verfahren zum Betrieb eines Reduktionsmitteldosiersystem zur Einspritzung eines Reduktionsmittels in den Abgasstrom eines Verbrennungsmotors zur selektiven katalytischen Reduktion wird in einer besonders vorteilhaften Weiterbildung die Förderleitung und/oder die Dosierkammer und/oder die Dosierleitung nach Beendigung der Dosierung über ein Schaltventil an eine Druckluftversorgung angeschlossen, um sie mittels Druckluft von Reduktionsmittel zu befreien, wobei zumindest ein Zyklus mit Druckluft durchlaufen wird oder alle Eingänge und Ausgänge beider Volumina gleichzeitig geöffnet sind.

Mit einem Zyklus ist dabei gemeint, dass der Eingang des ersten Volumens gleichzeitig zusammen mit dem Ausgang des zweiten Volumens geöffnet ist, während der Eingang des zweiten Volumens und der Ausgang des ersten Volumens geschlossen sind, und anschließend der Eingang des zweiten Volumens gleichzeitig mit dem Ausgang des ersten Volumens geöffnet ist, während der Eingang des ersten Volumens und der Ausgang des zweiten Volumens geschlossen sind.

Durch eine derartige Abfolge zumindest eines Zyklus mit Druckluft anstelle der Reduktionsmittellösung oder aber mit gleichzeitig geöffneten Einlass- und Auslassventilen an beiden Volumina werden die Förderleitung, die Dosierkammer und die Dosierleitung nach Beendigung der Dosierung zuverlässig von der Reduktionsmittellösung befreit, sodass ein Einfrieren oder Auskristallisieren der Reduktionsmittellösung verhindert und Frostschäden effektiv vorgebeugt wird.

Ein Ausführungsbeispiel der Erfindung ist in der Figur dargestellt und wird nachfolgend näher erläutert. Es zeigt:

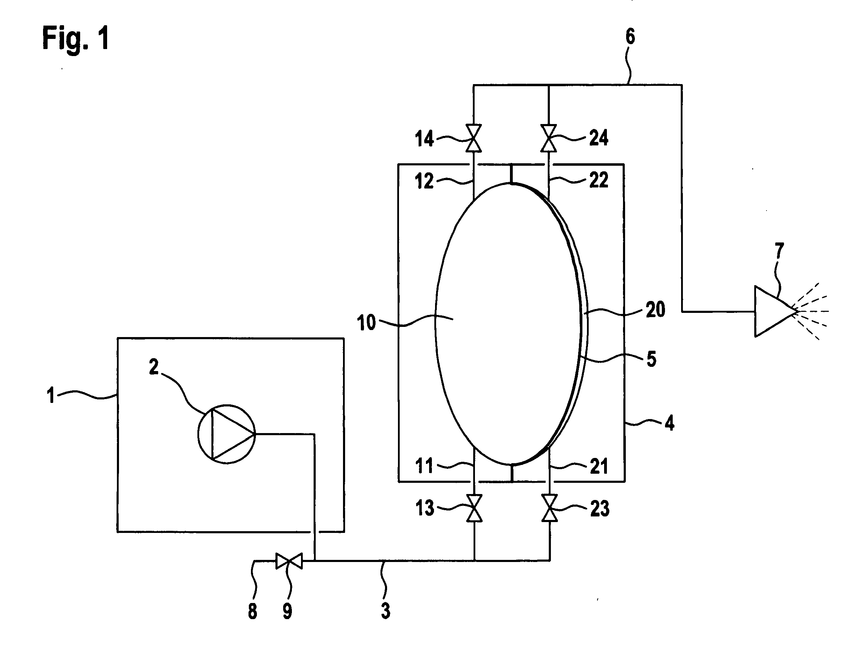

- Fig. 1: Ein Anlagenschema eines Reduktionsmitteldosiersystems mit einer in die Förderleitung integrierten Dosierkammer.

In Fig. 1 ist dargestellt ein Anlagenschema eines Reduktionsmitteldosiersystems mit der in die Förderleitung integrierten Dosierkammer.

Aus dem Tank 1 wird mittels der Förderpumpe 2 Reduktionsmittel gefördert. Die Förderpumpe 2 ist integraler Bestandteil des Reduktionsmitteldosiersystems. Die Förderung des Reduktionsmittels aus dem Tank 1 erfolgt über die Förderleitung 3. In die Förderleitung 3 ist integriert die Dosierkammer 4, die im Inneren durch eine Membran 5 in zwei Volumina 10, 20 unterteilt ist. Das erste Volumen 10 besitzt einen Einlass 11 und einen Auslass 12. Der Einlass 11 ist über das Einlassventil 13 gesteuert. Der Auslass 12 ist über das Auslassventil 14 gesteuert. Der Einlass 11 wird gespeist von der Förderleitung 3.

Das zweite Volumen 20 weist ebenfalls einen Einlass 21 mit einem Einlassventil 23 auf. Ferner weist das zweite Volumen 20 einen Auslass 22 mit dem Auslassventil 24 auf. Der Einlass 21 des zweiten Volumens 20 wird ebenfalls von der Zuleitung 3 gespeist.

Die beiden Auslässe 12 des ersten Volumens 10 und 22 des zweiten Volumens 20 münden in die Dosierleitung 6 zur Düse 7. Über die Düse 7 wird das Reduktionsmittel in den nicht dargestellten Abgastrakt eingeleitet und zerstäubt. Die Einlassventile 13, 23 und die Auslassventile 14, 24 der beiden Volumina 10, 20 in der Dosierkammer 4 sind unabhängig voneinander ansteuerbar und schaltbar.

Über die Zuleitung 3 wird das Reduktionsmittel mittels der Förderpumpe 2 gefördert. Die Förderpumpe 2 ist druckbegrenzt. Die Zuleitung 3 wird vor den Einlassventilen 13, 23 aufgeteilt und auf die beiden Einlasskanäle 11, 21, der durch die Dosiermembran 5 getrennten Volumina 10, 20 zugeführt. Auf der Auslassseite werden die Kanäle 12, 22 nach den Ventilen 14, 24 zusammengeführt und münden in der Dosierleitung 6, welche bis zu der Düse 7 geführt wird.

Die Funktion des Reduktionsmitteldosiersystems ergibt sich durch wechselseitiges Öffnen und Schließen der Einlassventile 13, 23 und der Auslassventile 14, 24, so dass jeweils das Einlassventil eines Volumens und das Auslassventil des anderen Volumens gleichzeitig geöffnet sind, während die übrigen Ventile verschlossen bleiben.

Nachfolgend wird die Funktionsweise des Reduktionsmitteldosiersystems während des Dosierbetriebes erläutert. Dabei ist die Förderpumpe 2 im Dauerbetrieb. Das Ventil 23 am Einlass zum zweiten Volumen 20 öffnet, während gleichzeitig das Auslassventil 14 des ersten Volumens 10 öffnet. Das zweite Volumen 20 wird geflutet, bis die Membran 5 an der linken Wand des ersten Volumens 10 anliegt, so dass das erste Volumen 10 über das Auslassventil 14 vollkommen entleert ist. Sobald dies erfolgt ist, wird das Einlassventil 23 zum zweiten Volumen 20 sowie das Auslassventil 14 des ersten Volumens 10 geschlossen und es werden das Einlassventil 13 zum ersten Volumen 10 sowie das Auslassventil 24 des zweiten Volumens 20 geöffnet. Aufgrund der weiteren Förderung der Förderpumpe 2 wird sodann das erste Volumen 10 über das geöffnete Einlassventil 13 mit Reduktionsmittel befüllt und die flexible Membran 5 wird zurückgedrängt in die in der Fig. 1 dargestellte Position, in der das zweite Volumen 20 über das geöffnete Auslassventil 24 vollständig entleert ist und die Membran 5 an der rechten Wand des zweiten Volumens 20 anliegt, während das erste Volumen 10 vollständig gefüllt wird. Dabei wird das in dem zweiten Volumen 20 befindliche Reduktionsmittel über das Auslassventil 24 zur Dosierleitung 6 und weiter zur Düse 7 gefördert.

Der zuvor beschriebene Zyklus wird während des Dosierbetriebes permanent wiederholt, d.h. es sind immer alternierend der Einlass des einen Volumens und Auslass des anderen Volumens geöffnet, während die anderen Ventile geschlossen sind, so dass über die Befüllung des einen Volumens und die Verdrängung der flexiblen Membran 5 das andere Volumen entsprechend entleert und das darin befindliche Reduktionsmittel zur Dosierleitung 6 gefördert wird.

Zur Entlüftung des Dosiersystems ist eine Lufteinspeisung 8 mit einem Schaltventil 9 an der Förderleitung 3 zwischen der Förderpumpe 2 und der Dosierkammer 4 vorgesehen. Eine Entlüftung ist erforderlich, um das Dosiersystem nach Beendigung der Dosierung von dem Reduktionsmittel zu befreien, um ein Einfrieren des Reduktionsmittels und/oder ein Auskristallisieren des Reduktionsmittels zu vermeiden, da hierdurch das Dosiersystem beschädigt werden könnte und die Düse verstopfen könnte.

Nach Beendigung der Dosierung wird somit bei abgeschalteter Förderpumpe über die Lufteinspeisung 8 das Schaltventil 9 geöffnet und Druckluft in die Förderleitung 3 eingeleitet. Für die Entlüftung ergeben sich zwei Möglichkeiten. Zum einen kann der zuvor beschriebene Zyklus mit wechselseitig geöffneten und geschlossenen Einlass- und Auslassventilen mit Druckluft durchlaufen werden, um sowohl die beiden Volumina 10, 20 als auch die Dosierleitung 6 und die Düse 7 von Reduktionsmitteln zu befreien.

Alternativ kann eine Entlüftung dadurch vorgenommen werden, dass alle Einlass- und Auslassventile 13, 14, 23, 24 für eine bestimmte Zeitspanne gleichzeitig geöffnet werden, so dass sowohl die Förderleitung 3 mitsamt den Einlässen 11, 21 als auch die beiden Volumina 10, 20 und deren Auslasskanäle 12, 22 sowie die Dosierleitung 6 und die Düse 7 vollständig mit Luft gefüllt werden, d.h. dass das in der Förderleitung 3 der Dosierkammer 4, der Dosierleitung 6 und der Düse 7 befindliche Reduktionsmittel mittels der Druckluft über die Düse 7 in den Abgastrakt ausgeschoben wird.

Durch die Dosierkammer 4, die im Inneren durch die flexible Membran 5 in zwei Volumina 10, 20 unterteilt wird, wird eine exakte Festlegung des Dosiervolumens ermöglicht, ohne dass es auf die Funktionsweise und Beschaffenheit der Förderpumpe 2 ankommt.

## Patentansprüche

1. Reduktionsmitteldosiersystem zur Einspritzung eines Reduktionsmittels in den Abgasstrom eines Verbrennungsmotors zur selektiven katalytischen Reduktion, mit einer Förderpumpe (2), mittels derer Reduktionsmittel aus einem Reduktionsmitteltank (1) über eine Förderleitung (3) gefördert und über zumindest eine Düse (7) in den Abgasstrom des Verbrennungsmotors eingeleitet wird, wobei in die Förderleitung (3) eine Dosierkammer (4) integriert ist, die mittels eines lageveränderlichen Elementes (5) in zwei getrennte Volumina (10, 20) unterteilt ist, wobei jedes der beiden Volumina (10, 20) über zumindest einen Eingang (11, 21) und zumindest einen Ausgang (12, 22) verfügt, **dadurch gekennzeichnet, dass** die Eingänge (11, 21) beider Volumina (10, 20) mit der Förderleitung (3) der Pumpe (2) verbunden sind und von der Förderleitung (3) gespeist werden.

2. Dosiersystem nach Anspruch 1, **dadurch gekennzeichnet, dass** es sich bei , dem lageveränderlichen Element um eine flexible Membran (5) handelt.

3. Dosiersystem nach Anspruch 1 oder 2, **dadurch gekennzeichnet, dass** jedes der beiden Volumina (10, 20) an seinem Eingang (11, 21) ein schaltbares Einlassventil (13, 23) aufweist.

4. Dosiersystem nach einem der vorherigen Ansprüche, **dadurch gekennzeichnet, dass** jedes der beiden Volumina (10, 20) an seinem Ausgang (12, 22) ein schaltbares Auslassventil (14, 24) aufweist.

5. Dosiersystem nach Anspruch 3 oder 4, **dadurch gekennzeichnet, dass** es sich bei den Einlassventilen (13, 23) und/oder bei den Auslassventilen (14, 24) um magnetisch oder piezoelektrisch oder elektromotorisch oder pneumatisch betätigte Schaltventile handelt.

6. Dosiersystem nach einem der vorherigen Ansprüche, **dadurch gekennzeichnet, dass** die Förderleitung (3) ein Mehrwegeventil aufweist, mittels dessen der Einlass zu den beiden Volumina (10, 20) steuerbar ist.

7. Dosiersystem nach einem der vorherigen Ansprüche, **dadurch gekennzeichnet, dass** die Ausgänge (12, 22) beider Volumina (10, 20) in eine Dosierleitung (6) zur Düse (7) münden, insbesondere dass die Dosierleitung (6) ein Mehrwegeventil aufweist, mittels dessen der Auslass aus den beiden Volumina (10, 20) steuerbar ist.

8. Dosiersystem nach einem der vorherigen Ansprüche, **dadurch gekennzeichnet, dass** die Förderpumpe (2) druckbegrenzt ist und/oder dass zwischen der Förderpumpe (2) und der Dosierkammer (4) ein Druckbegrenzer in die Förderleitung (3) integriert ist.

9. Dosiersystem nach einem der vorherigen Ansprüche, **dadurch gekennzeichnet, dass** eine Druckluftversorgung besteht und das Reduktionsmittel innerhalb oder außerhalb der Düse (7) mittels Druckluft zerstäubt wird, insbesondere dass die Druckluftversorgung ein Schaltventil und/oder ein Druckregelventil aufweist.

10. Dosiersystem nach einem der vorherigen Ansprüche, **dadurch gekennzeichnet, dass** die Förderleitung (3) und/oder die Dosierkammer (4) und/oder die Dosierleitung (6) über ein Schaltventil (9) an eine Druckluftversorgung (8) angeschlossen sind, um sie nach Beendigung der Dosierung mittels Druckluft von Reduktionsmittel zu befreien.

11. Dosiersystem nach einem der vorherigen Ansprüche, **dadurch gekennzeichnet, dass** es sich bei der Förderpumpe (2) um eine Membranpumpe oder eine Kolbenpumpe oder eine Kreiselpumpe oder eine Orbitalpumpe oder eine Zahnradpumpe handelt.

12. Verfahren zum Betrieb eines Reduktionsmitteldosiersystems zur Einspritzung eines Reduktionsmittels in den Abgasstrom eines Verbrennungsmotors zur selektiven katalytischen Reduktion, mit einer Förderpumpe (2), mittels derer Reduktionsmittel aus einem Reduktionsmitteltank (1) über eine Förderleitung (3) gefördert und über zumindest eine Düse (7) in den Abgasstrom des Verbrennungsmotors eingeleitet wird, dass in die Förderleitung (3) eine Dosierkammer (4) integriert ist, die mittels eines lageveränderlichen Elementes (5) in zwei getrennte Volumina (10, 20) unterteilt ist, wobei jedes der beiden Volumina (10, 20) über zumindest einen Eingang (11, 21) und zumindest einen Ausgang (12, 22) verfügt, **dadurch gekennzeichnet**, das während des Dosierbetriebes des Dosiersystems wiederholt Zyklen durchlaufen werden, bei denen alternierend der Eingang (11) des ersten Volumens (10) gleichzeitig mit dem Ausgang (22) des zweiten Volumens (20) geöffnet ist, während der Eingang (21) des zweiten Volumens (20) und der Ausgang (12) des ersten Volumens (10) geschlossen sind, und anschließend der Eingang (21) des zweiten Volumens (20) gleichzeitig mit dem Ausgang (12) des ersten Volumens (10) geöffnet ist, während der Eingang (11) des ersten Volumens (10) und der Ausgang (22) des zweiten Volumens (20) geschlossen sind.

13. Verfahren nach Anspruch 12, **dadurch gekennzeichnet, dass** die Förderleitung (3) und/oder die Dosierkammer (4) und/oder die Dosierleitung (6) nach Beendigung der Dosierung über ein Schaltventil (9) an eine Druckluftversorgung (8) angeschlossen wird/werden, um sie mittels Druckluk von Reduktionsmittel zu befreien, wobei zumindest ein Zyklus mit Druckluft durchlaufen wird oder alle Eingänge (11, 21) und Ausgänge (12, 22) beider Volumina (10, 20) gleichzeitig geöffnet sind.

## Claims

1. Reducing agent metering system for injecting a reducing agent into the exhaust gas flow of an internal combustion engine for selective catalytic reduction, comprising a delivery pump (2) by means of which reducing agent is delivered from a reducing agent tank (1) via a delivery line (3) and is introduced into the exhaust gas flow of the internal combustion engine via at least one nozzle (7), a metering chamber (4) being integrated into the delivery line (3), which metering chamber is divided into two separate volumes (10, 20) by means of a position-variable element (5), each of the two volumes (10, 20) having at least one input (11, 21) and at least one output (12, 22), **characterised in that** the inputs (11, 21) of the two volumes (10, 20) are connected to the delivery line (3) of the pump (2) and are fed from the delivery line (3).

2. Metering system according to claim 1, **characterised in that** the position-variable element is a flexible membrane (5).

3. Metering system according to either claim 1 or claim 2, **characterised in that** each of the two volumes (10, 20) has a switchable inlet valve (13, 23) at the input (11, 21) thereof.

4. Metering system according to any of the preceding claims, **characterised in that** each of the two volumes (10, 20) has a switchable outlet (14, 24) valve at the output (12, 22) thereof.

5. Metering system according to either claim 3 or claim 4, **characterised in that** the inlet valves (13, 23) and/or the outlet valves (14, 24) are switching valves which are actuated magnetically or piezoelectrically or by electric motor or pneumatically.

6. Metering system according to any of the preceding claims, **characterised in that** the delivery line (3) has a multiport valve by means of which the inlet to the two volumes (10, 20) can be controlled.

7. Metering system according to any of the preceding claims, **characterised in that** the outputs (12, 22) of the two volumes (10, 20) discharge into a metering line (6) to the nozzle (7), in particular **in that** the metering line (6) has a multiport valve by means of which the outlet from the two volumes (10, 20) can be controlled.

8. Metering system according to any of the preceding claims, **characterised in that** the delivery pump (2) is pressure-limited and/or in that a pressure limiter is integrated into the delivery line (3) between the delivery pump (2) and the metering chamber (4).

9. Metering system according to any of the preceding claims, **characterised in that** there is a compressed air supply and the reducing agent is atomized inside or outside the nozzle (7) by means of compressed air, in particular **in that** the compressed air supply has a switching valve and/or a pressure control valve.

10. Metering system according to any of the preceding claims, **characterised in that** the delivery line (3) and/or the metering chamber (4) and/or the metering line (6) are connected to a compressed air supply (8) via a switching valve (9) in order to be cleared of reducing agent by means of compressed air after the metering has been completed.

11. Metering system according to any of the preceding claims, **characterised in that** the delivery pump (2) is a membrane pump or a piston pump or a centrifugal pump or an orbital pump or a geared pump.

12. Method for operating a reducing agent metering system for injecting a reducing agent into the exhaust gas flow of an internal combustion engine for selective catalytic reduction, comprising a delivery pump (2) by means of which reducing agent is delivered from a reducing agent tank (1) via a delivery line (3) and is introduced into the exhaust gas flow of the internal combustion engine via at least one nozzle (7), a metering chamber (4) being integrated into the delivery line (3), which metering chamber is divided into two separate volumes (10, 20) by means of a position-variable element (5), each of the two volumes (10, 20) having at least one input (11, 21) and at least one output (12, 22), **characterised in that**, in the metering mode of the metering system, cycles are repeatedly passed through in which, alternately, the input (11) of the first volume (10) is opened simultaneously with the output (22) of the second volume (20), while the input (21) of the second volume (20) and the output (12) of the first volume (10) are closed, and then the input (21) of the second volume (20) is opened simultaneously with the output (12) of the first volume (10), while the input (11) of the first volume (10) and the output (22) of the second volume (20) are closed.

13. Method according to claim 12, **characterised in that** the delivery line (3) and/or the metering chamber (4) and/or the metering line (6) is/are connected to a compressed air supply (8) via a switching valve (9) after the metering has been completed, in order to be cleared of reducing agent by means of compressed air, at least one cycle being passed through with compressed air or all inputs (11, 21) and outputs (12, 22) of the two volumes (10, 20) being opened at the same time.

## Revendications

1. Système de dosage d'agent de réduction pour injecter un agent de réduction dans le courant de gaz d'échappement d'un moteur à combustion interne pour la réduction catalytique sélective, comprenant une pompe d'alimentation (2), au moyen de laquelle de l'agent de réduction est prélevé d'un réservoir d'agent de réduction (1) via une conduite d'alimentation (3) et introduit via au moins une buse (7) dans le courant de gaz d'échappement du moteur à combustion interne, dans lequel est intégrée à la conduite d'alimentation (3) une chambre de dosage (4), qui est divisée au moyen d'un élément à position variable (5) en deux volumes séparés (10, 20), dans lequel chacun des deux volumes (10, 20) dispose d'au moins une entrée (11, 21) et d'au moins une sortie (12, 22), **caractérisé en ce que** les entrées (11, 21) des deux volumes (10, 20) sont reliées à la conduite d'alimentation (3) de la pompe (2) et sont alimentées par la conduite d'alimentation (3).

2. Système de dosage selon la revendication 1, **caractérisé en ce que** l'élément à position variable est une membrane souple (5).

3. Système de dosage selon la revendication 1 ou la revendication 2, **caractérisé en ce que** chacun des deux volumes (10, 20) présente à son entrée (11, 21) une soupape d'entrée commutable (13, 23).

4. Système de dosage selon l'une quelconque des revendications précédentes, **caractérisé en ce que** chacun des deux volumes (10, 20) présente à sa sortie (12, 22) une soupape de sortie (14, 24).

5. Système de dosage selon la revendication 3 ou la revendication 4, **caractérisé en ce que** les soupapes d'entrée (13, 23) et/ou les soupapes de sortie (14, 24) sont des soupapes de commande commandées par voie magnétique ou piézoélectrique ou électromotrice ou pneumatique.

6. Système de dosage selon l'une quelconque des revendications précédentes, **caractérisé en ce que** la conduite d'alimentation (3) présente une soupape à voies multiples au moyen de laquelle l'entrée dans les deux volumes (10, 20) peut être commandée.

7. Système de dosage selon l'une quelconque des revendications précédentes, **caractérisé en ce que** les sorties (12, 22) des deux volumes (10, 20) débouchent par une conduite de dosage (6) dans la buse (7), en particulier **en ce que** la conduite de dosage (6) présente une soupape à voies multiples au moyen de laquelle la sortie des deux volumes (10, 20) peut être commandée.

8. Système de dosage selon l'une quelconque des revendications précédentes, **caractérisé en ce que** la pompe d'alimentation (2) est limitée en pression et/ou un limiteur de pression est intégré à la conduite d'alimentation (3) entre la pompe d'alimentation (2) et la chambre de dosage (4).

9. Système de dosage selon l'une quelconque des revendications précédentes, **caractérisé en ce qu'**il y a une source d'air comprimé et l'agent de réduction est pulvérisé à l'intérieur ou à l'extérieur de la buse (7) au moyen d'air comprimé, en particulier **en ce que** la source d'air comprimé présente une soupape de commande et/ou un clapet de réglage de pression.

10. Système de dosage selon l'une quelconque des revendications précédentes, **caractérisé en ce que** la conduite d'alimentation (3) et/ou la chambre de dosage (4) et/ou la conduite de dosage (6) est ou sont raccordées via une soupape de commande (9) à une source d'air comprimé (8) pour la ou les libérer de l'agent de réduction au moyen d'air comprimé à l'achèvement du dosage.

11. Système de dosage selon l'une quelconque des revendications précédentes, **caractérisé en ce que** la pompe d'alimentation (2) est une pompe à membrane ou une pompe à piston ou une pompe centrifuge ou une pompe orbitale ou une pompe à engrenages.

12. Procédé d'exploitation d'un système de dosage d'agent de réduction pour injecter un agent de réduction dans le courant de gaz d'échappement d'un moteur à combustion interne pour la réduction catalytique sélective, comprenant une pompe d'alimentation (2), au moyen de laquelle de l'agent de réduction est prélevé d'un réservoir d'agent de réduction (1) via une conduite d'alimentation (3) et introduit via au moins une buse (7) dans le courant de gaz d'échappement du moteur à combustion interne, dans lequel est intégrée à la conduite d'alimentation (3) une chambre de dosage (4), qui est divisée au moyen d'un élément à position variable (5) en deux volumes séparés (10, 20), dans lequel chacun des deux volumes (10, 20) dispose d'au moins une entrée (11, 21) et d'au moins une sortie (12, 22), **caractérisé en ce que**, au cours de l'exploitation de dosage du système de dosage, des cycles sont parcourus de manière répétée, dans lesquels, en alternance, l'entrée (11) du premier volume (10) est ouvert simultanément avec la sortie (22) du second volume (20), tandis que l'entrée (21) du second volume (20) et la sortie (12) du premier volume (10) sont fermés et, ensuite, l'entrée (21) du second volume (20) est ouvert simultanément avec la sortie (12) du premier volume (10), tandis que l'entrée (11) du premier volume (10) et la sortie (22) du second volume (20) sont fermés.

13. Procédé selon la revendication 12, **caractérisé en ce que** la conduite d'alimentation (3) et/ou la chambre de dosage (4) et/ou la conduite de dosage (6) est ou sont raccordés à l'achèvement du dosage via une soupape de commande (9) à une source d'air comprimé (8) pour la ou les libérer de l'agent de réduction au moyen d'air comprimé, dans lequel au moins un cycle avec de l'air comprimé est parcouru ou toutes les entrées (11, 21) et les sorties (12, 22) des deux volumes sont simultanément ouvertes.
